# FASCICULE DE BREVET EUROPEEN

(11) **EP 3 137 275 B1**
(45) Date de publication et mention de la délivrance du brevet: **01.01.2025**
(21) Numéro de dépôt: 15719419.2
(22) Date de dépôt: 10.04.2015
(51) Int. Cl.: B29C 43/18, G06K 19/07, F02F 11/00, B29C 43/34, B29C 65/64

(54) **PROCÉDÉ DE FABRICATION D'UN DISPOSITIF COMPRENANT UNE PARTIE EN ELASTOMERE ET PRODUIT OBTENU**
VERFAHREN ZUR HERSTELLUNG EINES WERKZEUGES MIT EINEM BESTANDTEIL AUS ELASTOMER UND PRODUKT NACH DEM VERFAHREN
PROCESS FOR MANUFACTURING A TOOL COMPRISING A PART OF ELASTOMERIC MATERIAL AND PRODUCT BY PROCESS

(30) Priorité: 30.04.2014 FR 1453948
(43) Date de publication de la demande: 08.03.2017
(73) Titulaire: Etancheite et Frottement J. Massot, 28350 Saint Lubin des Joncherets (FR)
(72) Inventeur: AUBERT, Guy, F-28300 Saint Prest (FR)
(74) Mandataire: IPAZ
(86) Numéro de dépôt international: PCT/EP2015/057872
(87) Numéro de publication internationale: WO 2015/165719

(56) Documents cités:
- EP-A1- 2 213 438
- EP-A1- 2 223 814
- DE-A1- 19 518 936
- DE-A1- 4 435 802
- US-A1- 2006 017 231
- US-A1- 2007 141 760
- US-A1- 2008 007 007
- US-A1- 2011 003 436
- US-A1- 2012 255 999
- US-B2- 8 430 142
- DATABASE WPI Week 201057, Derwent World Patents Index; AN 2010-K50087, XP002730296
- DATABASE WPI Week 201310, Derwent World Patents Index; AN 2013-B20081, XP002730297

## Description

### Domaine technique

La présente invention concerne un dispositif comprenant une partie en élastomère. Elle concerne aussi un procédé de fabrication associé.

Le domaine de l'invention est plus particulièrement celui des dispositifs comprenant une partie en élastomère dont on souhaite étudier ou surveiller le vieillissement.

### Etat de la technique antérieure

Le document US 2012 / 0 255 999 décrit une balle de golf comprenant un circuit RFID permettant d'identifier cette balle de golf parmi d'autres balles de golf. Le document US 2007 / 0 141 760 décrit un procédé de fabrication d'un dispositif RFID. Le document DE 44 35 802 décrit un procédé de fabrication d'une carte mono ou multi-couche(s) porteuse d'information.

EP 2 223 814 décrit un procédé de fabrication d'un pneu, incorporant un capteur RFID.

On connaît différents dispositifs comprenant une partie en élastomère tel un piston comprenant un axe métallique au bout duquel est disposé une tête en caoutchouc agencé pour se déplacer par des mouvements de va et vient à l'intérieur d'un cylindre.

Un des enjeux concernant l'utilisation d'un tel piston est l'étude ou la surveillance du vieillissement du caoutchouc composant la tête de ce piston.

Par exemple, il peut être important d'étudier ce vieillissement pour comprendre les raisons d'une usure inhabituelle ou pour déterminer des conditions d'utilisation inappropriées à corriger.

On connait pour cela différentes techniques d'étude ou de surveillance :
- des techniques visuelles, par lesquelles on analyse visuellement (à l'échelle microscopique ou macroscopique) l'état de caoutchouc. Typiquement, on recherche visuellement des craquelures ou tout autre signe de vieillissement.
- des techniques de stress, par lesquelles on fait subir au caoutchouc des contraintes dans le but de mesurer un paramètre représentatif de l'état structurel du caoutchouc, comme son élasticité.

Le but de la présente invention est d'améliorer ces techniques d'étude ou de surveillance du vieillissement, en proposant un nouveau dispositif comprenant une partie en élastomère, et un procédé de fabrication associé.

### Exposé de l'invention

Cet objectif est atteint avec un procédé de fabrication selon la revendication 1.

Ledit système de mesure comprend un capteur agencé pour mesurer au moins un paramètre physique auquel est soumise la partie en élastomère.

Le système de mesure comprend en outre :
- une mémoire agencée pour stocker des données de l'au moins un paramètre physique mesuré par le capteur, et/ou
- des moyens de transmission (de préférence sans fil) de ces données à l'extérieur de la partie en élastomère (ces données étant par exemple stockées à distance après transmission notamment si le système de mesure ne comprend pas de moyens pour stocker ces données).

Ceci permet de créer un historique de ces données.

Le système de mesure comprend de préférence en outre une source d'alimentation électrique du capteur et/ou de la mémoire et/ou des moyens de transmission.

L'élastomère est de préférence un caoutchouc naturel ou un caoutchouc synthétique ou un élastomère de type silicone.

Dans une première variante, la partie en élastomère est de préférence moulée par compression.

La partie en élastomère est de préférence moulée par compression selon les étapes suivantes :
- on introduit, dans un creux du moule, l'élastomère muni d'une cavité,
- on introduit, dans la cavité de l'élastomère, le système de mesure,
- alors que l'élastomère et le système de mesure sont contenus dans le creux du moule, on exerce une pression sur l'élastomère avec un élément de pression.

La pression exercée par l'élément de pression sur l'élastomère est de préférence exercée de sorte qu'une partie de l'élément de pression vient initialement fermer la cavité avec le système de mesure enfermé à l'intérieur de la cavité.

Le moule peut comprendre en outre un couvercle qui ferme le creux du moule lors de la solidification de l'élastomère. Lors de l'introduction de l'élastomère dans le creux du moule, le creux du moule n'est de préférence pas encore fermé par son couvercle.

L'élément de pression peut comprendre :
- le couvercle exerçant directement la pression sur la partie en élastomère, ou
- un insert, la pression étant exercée sur l'élastomère par l'insert de sorte qu'au moins une partie de l'insert soit insérée dans l'élastomère, et pendant la vulcanisation ou réticulation l'élastomère se solidifie autour de la partie de l'insert insérée dans l'élastomère tout en enrobant le système de mesure, puis on démoule le dispositif comprenant l'insert, l'élastomère solidifié autour de la partie de l'insert et le système de mesure enrobé dans l'élastomère.

Dans ce dernier cas (avec insert) :
- en présence de couvercle, lors de l'exercice de la pression, l'insert peut comprendre une partie qui n'est pas insérée dans l'élastomère mais qui est insérée dans le couvercle de manière à maintenir une position de l'insert, et/ou
- l'insert peut avoir une forme de tige s'étendant le long d'une direction d'élongation et comprenant une première extrémité destinée à être insérée dans l'élastomère et une deuxième extrémité destinée à ne pas être insérée dans l'élastomère. La pression est de préférence exercée le long de la direction d'élongation de la tige. Après la solidification, le système de mesure est de préférence situé dans l'élastomère dans le prolongement de la tige le long de la direction d'élongation, et du côté de la première extrémité.

Dans une deuxième variante, la partie en élastomère est moulée par injection ou transfert de matière à l'intérieur du moule.

De manière générale, le dispositif ainsi fabriqué est typiquement soit un piston soit un joint.

De manière générale, les moyens de transmission comprennent un marqueur RFID.

De manière générale, l'au moins un paramètre physique peut comprendre :
- une température de la partie en élastomère, et/ou
- une force ou une pression exercée sur la partie en élastomère, et/ou
- une impédance électrique de la partie en élastomère.

Le procédé selon l'invention comprend de préférence avant et/ou pendant la solidification de l'élastomère, un chauffage de l'élastomère, de préférence à une température de vulcanisation ou réticulation de l'élastomère, typiquement à au moins 100°c, de préférence à au moins 150°C.

Suivant encore un autre aspect de l'invention, il est proposé un dispositif selon la revendication 20.
Ce dispositif selon l'invention peut être un piston conformément à la revendication 21.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
- les figures 1 à 4 illustrent différentes étapes d'un premier mode de réalisation de procédé selon l'invention couvert par la revendication 1, et dont les éléments possèdent une symétrie de révolution autour de la flèche 11,
- la figure 5 illustre un dispositif selon l'invention obtenu par le premier mode de réalisation de procédé selon l'invention,
- la figure 6 illustre une variante du premier mode de réalisation de procédé selon l'invention,
- la figure 7 illustre un deuxième mode de réalisation de procédé selon l'invention couvert par la revendication 1, et dont les éléments possèdent une symétrie de révolution autour de la flèche 11, et
- la figure 8 illustre un dispositif selon l'invention obtenu par le deuxième mode de réalisation de procédé selon l'invention.

Ces modes de réalisation étant nullement limitatifs, on pourra notamment considérer des variantes de l'invention ne comprenant qu'une sélection de caractéristiques décrites par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

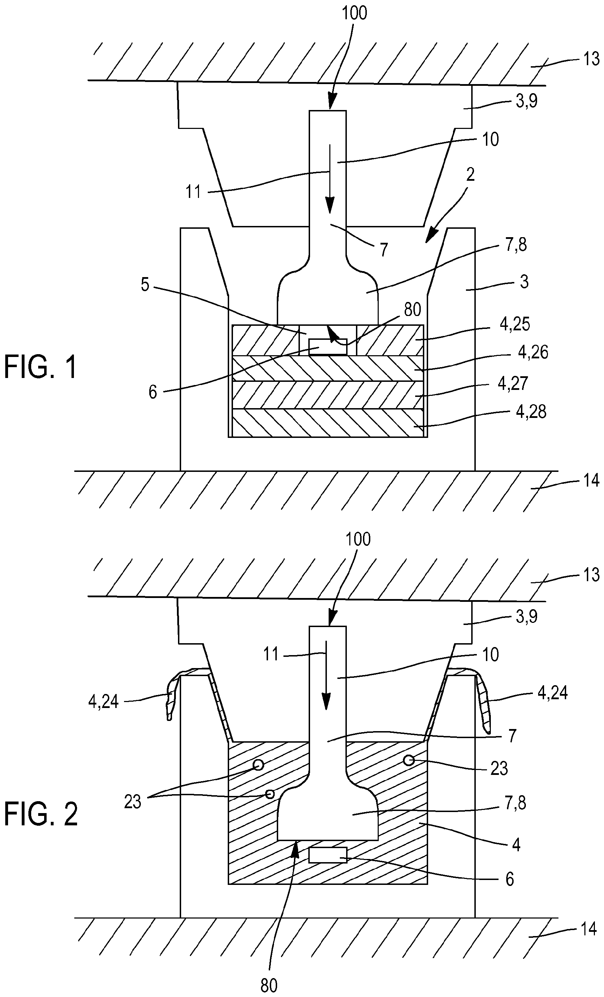

On va tout d'abord décrire, en référence aux figures 1 à 5, un premier mode de réalisation de procédé selon l'invention pour fabriquer un dispositif 1 comprenant une partie 12 en élastomère. La partie 12 en élastomère comprend un élastomère associé ou non à d'autres ingrédients (par exemple colorant et/ou autre). La partie 12 en élastomère comprend en poids au moins 50% d'élastomère, de préférence au moins 70%, dans le cas présent au moins 90%, idéalement 100% d'élastomère. Dans le cas où la partie 12 en élastomère comprend un élastomère associé à d'autres ingrédients, c'est un mélange.

Le dispositif 1 est un piston.

Selon ce premier mode de réalisation de procédé selon l'invention, la partie en élastomère 12 est moulée dans un moule 3, et se solidifie par vulcanisation à l'intérieur du moule 3.

Le moule 3 est en acier.

L'élastomère 4 est un caoutchouc.

Dans le premier mode de réalisation ici décrit, l'élastomère est un caoutchouc synthétique par exemple un caoutchouc Viton d'une dureté de 70 shore A (par exemple de référence 1710/ND2 de chez SAFIC ALCAN).

Cette partie en élastomère 12 peut comprendre divers additifs par exemple un colorant, etc.

Le procédé comprend avant et pendant la solidification de l'élastomère, un chauffage de l'élastomère à 180°C.

La partie 12 en élastomère est moulée par compression. Plus précisément, la partie 12 en élastomère est moulée par compression selon les étapes suivantes :
- dans n'importe quel ordre :
   - on introduit, dans un creux 2 du moule 3, l'élastomère 4 muni d'une cavité 5, (de préférence en premier)
   - on introduit, dans la cavité 5 de l'élastomère 4, un système de mesure 6, (de préférence en second)
- alors que l'élastomère 4 et le système de mesure 6 sont contenus dans le creux 2 du moule 3, on exerce une pression sur l'élastomère 4 avec un élément de pression.

Le système de mesure 6 comprend :
- un capteur agencé pour mesurer au moins un paramètre physique (par exemple une température) auquel est soumise la partie en élastomère,
- une mémoire agencée pour stocker des données de l'au moins un paramètre physique mesuré par le capteur (ces données comprenant typiquement des valeurs de l'au moins un paramètre physique de préférence en fonction d'un temps), on peut par exemple utiliser une mémoire intégrée au capteur (typiquement de taille mémoire 64 à 128 kbits) ou une mémoire de type mémoire flash (de plus grosse taille mémoire).
   - des moyens de transmission (de préférence sans fil) de ces données à l'extérieur de la partie en élastomère, les moyens de transmission comprenant typiquement un marqueur RFID (de l'anglais « Radio Frequency Identification » ou « Identification par radiofréquence » en français).
- un microprocesseur ou une unité électronique, agencé pour commander le capteur, la mémoire et les moyens de transmission, par exemple de référence ID CPR30-USB,et
- une source d'alimentation électrique (typiquement pile au Lithium, par exemple de référence CR2032, agencée pour alimenter électriquement le capteur, la mémoire, les moyens de transmission et le microprocesseur ou l'unité électronique, pour une autonomie typique de 6 mois à 2 ans ou plus.

Le marqueur RFID est de technologie UHF (Ultra haute fréquence, c'est-à-dire fonctionnant pour une fréquence supérieure à 860 MHz, de préférence entre 860 MHz et 960 MHz).

Le marqueur RFID comprend un boitier extérieur par exemple en céramique ou en nylon.

Le marqueur RFID utilisé est par exemple de référence tag RFID UHF XERAFY nano in.

Ce mode de réalisation par compression est nettement préféré par rapport à un moulage par injection, car il évite un déplacement du système de mesure 6 lors d'une injection d'élastomère 4 qui créerait un flux et un déplacement de matière. Ainsi, ce premier mode de réalisation a pour avantage de conférer une grande maitrise du positionnement des moyens de mesure 6.

L'au moins un paramètre physique comprend :
- une température de la partie en élastomère ; pour cela, le capteur d'au moins un paramètre comprend un capteur de température par exemple de référence CAPT'N PIC de chez PICDI; et/ou
- une force ou une pression exercée sur la partie en élastomère; pour cela, le capteur d'au moins un paramètre comprend un capteur de force ou de pression ; et/ou
- une impédance électrique de la partie en élastomère ; pour cela, le capteur d'au moins un paramètre comprend un capteur d'impédance;

Dans la variante préférée où les données de l'au moins un paramètre physique comprennent une température en fonction d'un temps, l'invention permet de mieux étudier le vieillissement du dispositif 1 et de mieux comprendre les contraintes thermiques subies par le dispositif dans le temps.

On peut étudier la régularité et les températures de cycles de nettoyage du dispositif 1.

De manière générale, dans le cas préféré où les données de l'au moins un paramètre physique comprennent un paramètre physique (température, force, pression, impédance électrique, etc) en fonction d'un temps, l'invention permet de mieux étudier le vieillissement du dispositif 1 et de mieux comprendre les contraintes subies par le dispositif dans le temps.

En outre, on remarque que l'invention permet d'étudier le vieillissement du dispositif 1 sans nécessairement avoir besoin de démonter le dispositif hors de ses conditions d'utilisation (usine ou autre) grâce aux moyens de transmission des données à l'extérieur de la partie 12 en élastomère.

La source d'alimentation est de préférence encapsulée dans un isolant thermique, de préférence dans du silicone RTV (pour « Room Temperature Vulcanizing silicone » ou « silicone qui vulcanise à température ambiante »), par exemple de référence « Rhodorsil RTV2 PartA+PartB ».

Le moule 3 :
- comprend une partie formant le creux 2, et
- comprend en outre un couvercle 9 agencé pour fermer le creux.

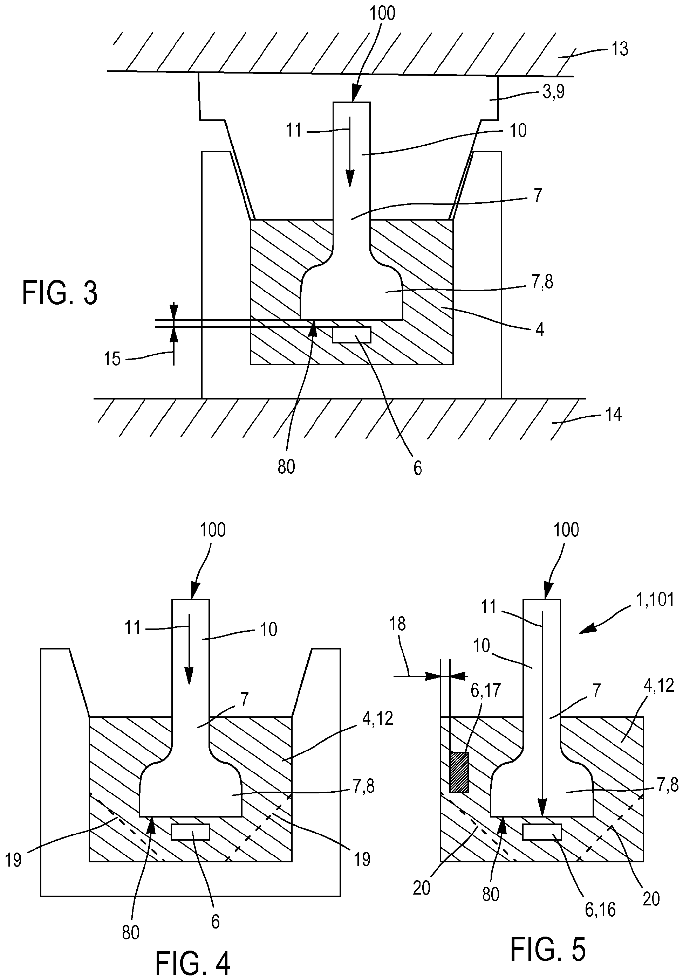

Le chauffage de l'élastomère (à 180°C) est fait pendant l'exercice de la pression :
- avant la solidification (figure 2)
- pendant la solidification (figure 3).

Le chauffage est exercé au moyen de deux plaques chauffantes 13, 14 qui compriment l'une vers l'autre :
- la partie du moule 3 formant le creux 2, et
- le couvercle 9 du moule
de manière à exercer la pression sur l'élastomère 4 contenu dans le creux 2 bouché par le couvercle 9.

Les plaques 13 et 14 sont des plateaux chauffants de presse, chauffées typiquement à 180°C.

Une des plaques 14 est en contact avec la partie du moule 3 formant le creux 2.

L'autre plaque 13 est en contact du couvercle 9, qui lui-même est en contact d'un insert 7 agencé pour être en contact de l'élastomère 4 dans le creux 2. L'élément de pression comprend cet insert 7.

L'insert 7 est en inox.

Les figures 1 à 5 illustrent différentes étapes successives d'un premier mode de réalisation de procédé selon l'invention.

En référence à la figure 1, on a commencé :
- par introduire, dans le creux 2 du moule 3, l'élastomère 4 solide et prédécoupé en fonction de la forme à mouler (par exemple sous la forme de plusieurs rondelles ou morceaux 25 à 28), cet élastomère 4 étant muni d'une zone d'accueil préférentiellement fixe peu sujette à transfert (une cavité 5), cet élastomère 4 étant introduit sous une forme non vulcanisée ou crue, appelée ébauche préformée ou matière première, le moule 3 étant préchauffé à la température de vulcanisation (typiquement 180°C) et
- par introduire, dans la cavité 5 de l'élastomère 4, le système de mesure 6.

On remarque sur la figure 1 que, lors de l'introduction de l'élastomère 4 dans le creux 2 du moule 3, le creux 2 du moule 3 n'est pas encore fermé par son couvercle 9.

Ensuite, en référence à la figure 1 que, alors que l'élastomère 4 et le système de mesure 6 sont contenus dans le creux 2 du moule 3, on commence à exercer la pression sur l'élastomère 4 avec l'élément de pression (avec une pression typiquement de 15 à 20 MPa) et à chauffer (à 180°C) l'élastomère 4.

La pression exercée par l'élément de pression (et donc l'insert 7) sur l'élastomère 4 est exercée de sorte qu'une partie 8 de l'élément de pression vient initialement (i.e. au début de l'exercice de la pression) fermer la cavité 5 avec le système de mesure 6 enfermé à l'intérieur de la cavité 5.

En référence à la figure 2, on ferme ensuite le moule 3 avec son couvercle 9 en continuant à exercer la pression sur l'élastomère 4 avec l'élément de pression et à chauffer l'élastomère 4 à la température de vulcanisation.

En référence à la figure 2, l'élément de pression comprend (et même consiste en) l'insert 7, la pression étant exercée sur l'élastomère par l'insert 7 de sorte qu'au moins la partie 8 de l'insert 7 soit insérée dans l'élastomère 4, de sorte qu'après solidification (vulcanisation ou réticulation) de l'élastomère 4 la partie 8 de l'insert 7 ne puisse pas être retirée de la partie 12 en élastomère 4 sans détruire ou détériorer la partie 12 en élastomère.

Lors de l'exercice de la pression, l'insert 7 comprend une partie 10 qui n'est pas destinée à être insérée dans l'élastomère 4 (ni liée et ni en contact de l'élastomère 4) mais qui est insérée dans le couvercle 9 et s'ajuste intimement au couvercle 9 de manière à maintenir fermement (i.e. avec un jeu minimum de type H7/g6 lorsque les matériaux de l'insert 7 et du couvercle 9 sont de même nature) l'insert 7.

L'insert 7 a une forme de tige s'étendant le long de la direction d'élongation 11 et comprenant une première extrémité 80 (où est située la partie 8) destinée à être insérée dans l'élastomère 4 et une deuxième extrémité 100 (où est située la partie 10) destinée à ne pas être insérée dans l'élastomère 4.

La pression est exercée le long de la direction d'élongation 11 de la tige.

En référence à la figure 2, on remarque que le chauffage et l'exercice de la pression fluidifient l'élastomère de sorte que la cavité 5 disparait.

On remarque en outre, toujours en référence à la figure 2, qu'avant l'exercice de la pression, l'élastomère est placé dans le creux 2 en léger surpoids (environ 10%) par rapport à la contenance maximale du creux 2 fermé par le couvercle 9. Des allers retours rapides ou oscillations du couvercle 9 le long de la direction 11 permet de chasser d'éventuelles bulles d'air 23 et le surplus 24 d'élastomère 4.

La figure 3 illustre l'étape suivante de solidification de l'élastomère 4 par vulcanisation qui dure approximativement 30 minutes pour une partie 12 en élastomère 4 ayant un volume de 180cm³.

Pendant la solidification (vulcanisation), on continue à exercer la pression sur l'élastomère 4 avec l'élément de pression et à chauffer l'élastomère 4 à température de vulcanisation.

En référence à la figure 3, le couvercle 9 ferme le creux 2 du moule 3 lors de la solidification (vulcanisation) de l'élastomère 4.

Pendant la vulcanisation, l'élastomère 4 se solidifie autour de la partie 8 de l'insert insérée dans l'élastomère 4 tout en enrobant le système de mesure 6.

Le système de mesure 6 est :
- soit, dans la variante préférentielle (qui évite des perturbations de mesure, par exemple dues à la température de l'insert 7 qui peut être différente de la température de l'élastomère 4) intégralement enrobé dans l'élastomère 4, i.e. l'élastomère 4 est en contact de l'intégralité du pourtour ou de la surface extérieure du système 6 ;
- soit partiellement enrobé dans l'élastomère 4, de sorte que tout le pourtour ou la surface extérieure du système 6 est contact en partie avec l'élastomère 4 et en partie avec l'insert 7 (i.e. pour une distance 15 nulle).

Dans la variante préférentielle illustrée, on remarque que pendant la vulcanisation de la partie 12 en élastomère, le système de mesure 6 est déjà inséré au cœur de la partie 12 en élastomère, de sorte qu'après la vulcanisation le système de mesure 6 est intégralement enrobé à l'intérieur de la partie 12 en élastomère 4.

En référence à la figure 4, on retire le couvercle 9 et on arrête d'exercer la pression sur l'élastomère 4 avec l'élément de pression et de chauffer l'élastomère 4.

En référence à la figure 5, on démoule ensuite le dispositif 1 comprenant l'insert 7, l'élastomère 4 solidifié autour de la partie 8 de l'insert et le système de mesure 6 enrobé dans l'élastomère 4.

On laisse le dispositif 1 terminer de refroidir à température ambiante, typiquement à 25°C.

La position du système de mesure 6 après la solidification (vulcanisation) de l'élastomère 4 dépend directement de la position initiale de la cavité 5 au début du procédé. On remarque qu'après la solidification v, le système de mesure 6 est situé (selon la position initiale de la cavité 5) :
- soit (position 16 illustrée sur les figures) dans l'élastomère 4 dans le prolongement de la tige le long de la direction d'élongation 11, et du côté de la première extrémité 80 ; cette position « médiane » est optimale pour mesure des contraintes moyennes (éventuellement nulles) subies par l'élastomère ;
- soit (position alternative 17 illustrée sur la figure 5) en dehors du prolongement de la tige le long de la direction d'élongation 11, de préférence à une distance 18 inférieure à 5 millimètres de l'extérieur de la partie 12 en élastomère 4 ; cette position est optimale pour mesurer les contraintes maximales subies par l'élastomère (plus fortes températures, plus fortes forces de frottements, plus fortes pressions, etc)

Le dispositif 1 ainsi obtenu et illustré sur la figure 5 comprend donc :
- la partie 12 en élastomère solidifié 4,
- le système de mesure 6 intégralement enrobé à l'intérieur de la partie 12 en élastomère 6, ledit système de mesure comprenant le capteur agencé pour mesurer l'au moins un paramètre physique auquel est soumise la partie 12 en élastomère, la mémoire agencée pour stocker des données de l'au moins un paramètre physique mesuré par le capteur, les moyens de transmission de ces données à l'extérieur de la partie en élastomère, et la source d'alimentation électrique.

Plus exactement, sur l'exemple précédemment illustré, le dispositif 1 est un est un piston 101 comprenant :
- une tête 12 de piston en élastomère solidifié 4 (La tête d'un piston est la partie agencée pour, lors de l'utilisation du piston, être en contact avec un fluide (typiquement du lait dans une machine de dosage pour la fabrication de produits laitiers tels que yaourts ou autre) à comprimer ou détendre),
- un axe de piston comprenant l'insert 7 dont au moins une partie 8 est insérée dans l'élastomère 4 (L'axe du piston est une pièce mécanique qui, lors de l'utilisation du piston, relie la tête du piston 12 à des moyens de motorisation pour permettre le mouvement de la tête du piston dans un cylindre de forme complémentaire),
- le système de mesure 6 intégralement enrobé à l'intérieur de la tête en élastomère, ledit système de mesure comprenant le capteur agencé pour mesurer l'au moins un paramètre physique auquel est soumise la partie en élastomère, la mémoire agencée pour stocker des données de l'au moins un paramètre physique mesuré par le capteur, les moyens de transmission de ces données à l'extérieur de la partie en élastomère, et la source d'alimentation électrique.

Dans des variantes en référence aux figures 4 et 5, on remarque que le creux 2 du moule 3 peut avoir des formes variées. Par exemple, au lieu d'un angle droit dans le fond du moule, le fond du moule peut avoir un angle biseauté (le long des lignes pointillées 19 de la figure 4), de sorte que la partie 12 en élastomère aura elle aussi une forme biseautée (le long des lignes pointillées 20 de la figure 5).

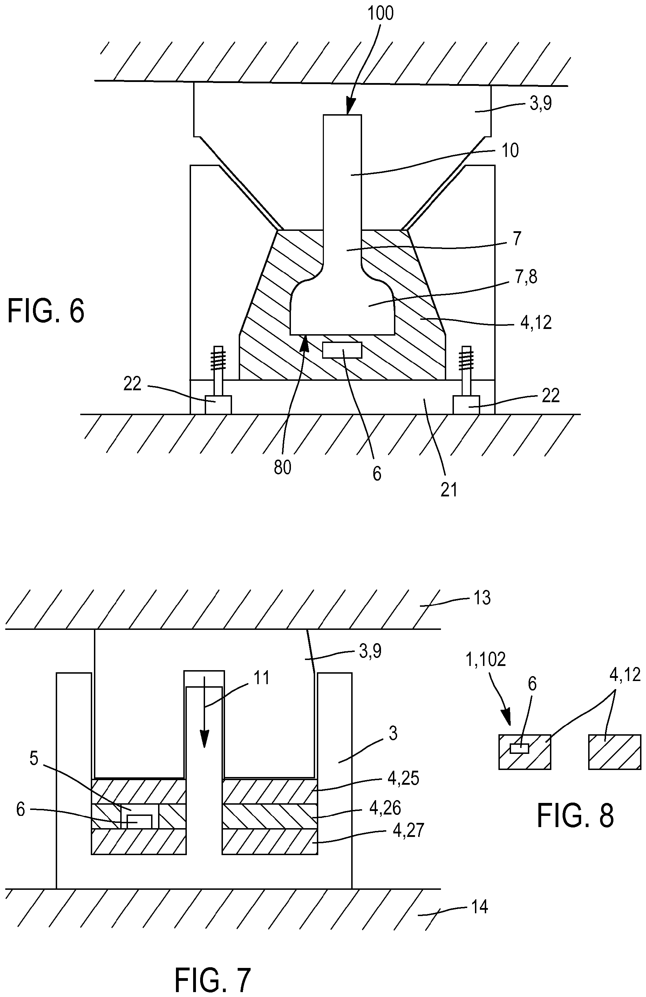

Dans des variantes en référence à la figure 6, on remarque que la partie du moule 3 formant le creux 2 peut comprendre une partie 21 démontable (par exemple grâce à des vis 22) notamment lorsque le creux 2 du moule est agencé pour donner à la partie 12 une forme ne pouvant pas être démoulée par l'ouverture bouchée par le couvercle 9, même après retrait du couvercle.

On notera que dans d'autres variantes, on peut aussi utiliser un élastomère synthétique (caoutchouc synthétique) et/ou un élastomère silicone, par exemple un silicone de dureté 60 Shore A (par exemple de référence 766R100 de chez JEM) vulcanisé aux peroxydes, vulcanisé à 110°C (au lieu de 180°C), avec un temps de vulcanisation de 10 minutes pour un volume de la partie 12 de 180 cm³.

On va maintenant décrire, en référence aux figures 7 et 8, un deuxième mode de réalisation de procédé selon l'invention et un dispositif selon l'invention obtenu par le deuxième mode de réalisation de procédé selon l'invention uniquement pour leurs différences par rapport aux modes de réalisations et variantes décrites en référence aux figures 1 à 6.

On remarque ce deuxième mode de réalisation de procédé selon l'invention ne comprend pas d'insert 7.

En référence à la figure 7, l'élément de pression comprend le couvercle 9 qui est en contact de l'élastomère 4 lors de l'exercice de la pression de manière à exercer directement la pression sur la partie en élastomère.

Le dispositif 1 ainsi obtenu et illustré sur la figure 8 comprend donc :
- la partie 12 en élastomère solidifié 4,
- le système de mesure 6 intégralement enrobé à l'intérieur de la partie 12 en élastomère 6, ledit système de mesure comprenant le capteur agencé pour mesurer l'au moins un paramètre physique auquel est soumise la partie 12 en élastomère, la mémoire agencée pour stocker des données de l'au moins un paramètre physique mesuré par le capteur, les moyens de transmission de ces données à l'extérieur de la partie en élastomère, et la source d'alimentation électrique.

Plus exactement, le dispositif 1 est un joint cylindrique 102 percé en son centre.

Selon les deux modes de réalisation décrits, la partie 12 en élastomère forme un joint d'un piston 101 ou un joint seul 102.

Bien sûr, l'invention n'est pas limitée aux exemples qui viennent d'être décrits et de nombreux aménagements peuvent être apportés à ces exemples sans sortir du cadre de l'invention.

Par exemple, la partie 12 en élastomère peut être moulée par injection ou transfert de matière à l'intérieur du moule 3.

Bien entendu, les différentes caractéristiques, formes, variantes et modes de réalisation de l'invention peuvent être associées les unes avec les autres. En particulier toutes les variantes et modes de réalisation décrits précédemment sont combinables entre eux.

## Revendications

1. Procédé de fabrication d'un dispositif (1) comprenant une partie (12) en élastomère (4), dans lequel la partie en élastomère est moulée dans un moule (3) par compression et/ou par injection et/ou par transfert de matière à l'intérieur du moule (3), et se solidifie par vulcanisation ou réticulation à l'intérieur du moule,
**caractérisé en ce que,** pendant la solidification par vulcanisation ou réticulation de la partie en élastomère, un système de mesure (6) est situé dans la partie en élastomère, de sorte qu'après la solidification par vulcanisation ou réticulation le système de mesure (6) est enrobé à l'intérieur de la partie (12) en élastomère, ledit système de mesure comprenant un capteur agencé pour mesurer au moins un paramètre physique auquel est soumise la partie en élastomère, une mémoire agencée pour stocker des données de l'au moins un paramètre physique mesuré par le capteur, des moyens de transmission de ces données à l'extérieur de la partie en élastomère, et une source d'alimentation électrique.

2. Procédé selon la revendication 1, **caractérisé en ce que** la partie en élastomère est moulée par compression.

3. Procédé de fabrication selon la revendication 2, **caractérisé en ce que** la partie en élastomère est moulée par compression selon les étapes suivantes :
- on introduit, dans un creux (2) du moule (3), l'élastomère (4) muni d'une cavité (5),
- on introduit, dans la cavité (5) de l'élastomère (4), le système de mesure (6),
- alors que l'élastomère (4) et le système de mesure (6) sont contenus dans le creux (2) du moule (3), on exerce une pression sur l'élastomère (4) avec un élément de pression.

4. Procédé selon la revendication 3, **caractérisé en ce que** la pression exercée par l'élément de pression sur l'élastomère (4) est exercée de sorte qu'une partie (8) de l'élément de pression vient initialement fermer la cavité (5) avec le système de mesure (6) enfermé à l'intérieur de la cavité (5).

5. Procédé selon la revendication 3 ou 4, **caractérisé en ce que** le moule (3) comprend en outre un couvercle (9) qui ferme le creux (2) du moule (3) lors de la solidification de l'élastomère (4).

6. Procédé selon la revendication 5, **caractérisé en ce que** lors de l'introduction de l'élastomère (4) dans le creux (2) du moule (3), le creux (2) du moule (3) n'est pas encore fermé par son couvercle (9).

7. Procédé selon la revendication 5 ou 6, **caractérisé en ce que** l'élément de pression comprend le couvercle (9) exerçant directement la pression sur la partie en élastomère.

8. Procédé selon l'une quelconque des revendications 3 à 6, **caractérisé en ce que** l'élément de pression comprend un insert (7), la pression étant exercée sur l'élastomère par l'insert (7) de sorte qu'au moins une partie (8) de l'insert (7) soit insérée dans l'élastomère (4), et pendant la vulcanisation ou réticulation l'élastomère (4) se solidifie autour de la partie (8) de l'insert insérée dans l'élastomère (4) tout en enrobant le système de mesure (6), puis on démoule le dispositif (1) comprenant l'insert (7), l'élastomère (4) solidifié autour de la partie (8) de l'insert et le système de mesure (6) enrobé dans l'élastomère (4).

9. Procédé selon la revendication 8 considérée comme dépendante de l'une quelconque des revendications 5 à 6, **caractérisé en ce que** lors de l'exercice de la pression, l'insert (7) comprend une partie (10) qui est insérée dans le couvercle (9) de manière à maintenir une position de l'insert (7).

10. Procédé selon la revendication 8 ou 9, **caractérisé en ce que** l'insert a une forme de tige s'étendant le long d'une direction d'élongation (11) et comprenant une première extrémité (80) destinée à être insérée dans l'élastomère (4) et une deuxième extrémité (100) destinée à ne pas être insérée dans l'élastomère (4).

11. Procédé selon la revendication 10, **caractérisé en ce que** la pression est exercée le long de la direction d'élongation (11) de la tige.

12. Procédé selon la revendication 10 ou 11, **caractérisé en ce qu'**après la solidification, le système de mesure (6) est situé dans l'élastomère (4) dans le prolongement de la tige le long de la direction d'élongation (11), et du côté de la première extrémité (80).

13. Procédé selon la revendication 1, **caractérisé en ce que** la partie en élastomère est moulée par injection ou transfert de matière à l'intérieur du moule.

14. Procédé selon l'une quelconque des revendications précédentes, **caractérisé en ce que** le dispositif (1) est un piston (101) ou un joint (102).

15. Procédé selon l'une quelconque des revendications précédentes, **caractérisé en ce que** les moyens de transmission comprennent un marqueur RFID.

16. Procédé selon l'une quelconque des revendications précédentes, **caractérisé en ce que** l'au moins un paramètre physique comprend une température de la partie en élastomère.

17. Procédé selon l'une quelconque des revendications précédentes, **caractérisé en ce que** l'au moins un paramètre physique comprend une force ou une pression exercée sur la partie en élastomère.

18. Procédé selon l'une quelconque des revendications précédentes, **caractérisé en ce que** l'au moins un paramètre physique comprend une impédance électrique de la partie en élastomère.

19. Procédé selon l'une quelconque des revendications précédentes, **caractérisé en ce qu'**il comprend avant et/ou pendant la solidification de l'élastomère, un chauffage de l'élastomère.

20. Dispositif comprenant :
- une partie (12) en élastomère solidifié (4),
- un système de mesure (6) enrobé, selon un procédé selon l'une quelconque des revendications précédentes, à l'intérieur de la partie en élastomère, ledit système de mesure comprenant un capteur agencé pour mesurer au moins un paramètre physique auquel est soumise la partie en élastomère, une mémoire agencée pour stocker des données de l'au moins un paramètre physique mesuré par le capteur, des moyens de transmission de ces données à l'extérieur de la partie en élastomère, et une source d'alimentation électrique.

21. Dispositif selon la revendication 20, **caractérisé en ce que** le dispositif est un piston (1) , et **en ce que** :
- la partie (12) en élastomère solidifié (4) est une tête (12) de piston en élastomère solidifié (4),
- le système de mesure (6) est enrobé à l'intérieur de la tête en élastomère,
le dispositif comprenant en outre :
- un axe de piston comprenant un insert (7) dont au moins une partie (8) est insérée dans l'élastomère (4).

## Patentansprüche

1. Verfahren zur Herstellung einer Vorrichtung (1) mit einem Teil (12) aus Elastomer (4), wobei das Elastomerteil in einer Form (3) durch Pressen und/oder Einspritzen und/oder Überführen von Material in das Innere der Form (3) geformt wird und sich durch Vulkanisation oder Vernetzung im Inneren der Form verfestigt,
**dadurch gekennzeichnet, dass** während der Verfestigung durch Vulkanisation oder Vernetzung des Elastomerteils ein Messsystem (6) in dem Elastomerteil angeordnet ist, so dass nach der Verfestigung durch Vulkanisation oder Vernetzung das Messsystem (6) innerhalb des Elastomerteils (12) eingebettet ist, wobei das Messsystem einen Sensor zum Messen von zumindest einem physikalischen Parameter, dem das Elastomerteil ausgesetzt ist, einen Speicher zum Abspeichern von Daten des zumindest einen vom Sensor gemessenen physikalischen Parameters, Mittel zur Übertragung dieser Daten nach außerhalb des Elastomerteils und eine Stromversorgungsquelle umfasst.

2. Verfahren nach Anspruch 1, **dadurch gekennzeichnet, dass** der Elastomerteil formgepresst wird.

3. Herstellungsverfahren nach Anspruch 2, **dadurch gekennzeichnet, dass** das Elastomerteil durch folgende Schritte formgepresst wird:
- Einbringen von mit einer Vertiefung (5) versehenem Elastomer (4) in einen Hohlraum (2) der Form (3),
- Einführen des Messsystems (6) in die Vertiefung (5) des Elastomers (4),
- bei Vorliegen von Elastomer (4) und Messsystem (6) in dem Hohlraum (2) der Form (3), Beaufschlagen des Elastomers (4) mit Druck durch ein Druckelement.

4. Verfahren nach Anspruch 3, **dadurch gekennzeichnet, dass** der durch das Druckelement auf das Elastomer (4) ausgeübte Druck so ausgeübt wird, dass ein Abschnitt (8) des Druckelements anfänglich die Vertiefung (5) mit dem im Inneren der Vertiefung (5) eingeschlossenen Messsystem (6) verschließt.

5. Verfahren nach Anspruch 3 oder 4, **dadurch gekennzeichnet, dass** die Form (3) ferner eine Abdeckung (9) umfasst, die bei der Verfestigung des Elastomers (4) den Hohlraum (2) der Form (3) verschließt.

6. Verfahren nach Anspruch 5, **dadurch gekennzeichnet, dass** beim Einbringen des Elastomers (4) in den Hohlraum (2) der Form (3) der Hohlraum (2) der Form (3) noch nicht mit ihrer Abdeckung (9) verschlossen ist.

7. Verfahren nach Anspruch 5 oder 6, **dadurch gekennzeichnet, dass** das Druckelement die Abdeckung (9) enthält, die direkt Druck auf das Elastomerteil ausübt.

8. Verfahren nach einem der Ansprüche 3 bis 6, **dadurch gekennzeichnet, dass** das Druckelement einen Einsatz (7) umfasst, wobei der Druck auf das Elastomer durch den Einsatz (7) so ausgeübt wird, dass zumindest ein Abschnitt (8) des Einsatzes (7) in das Elastomer (4) eingeführt wird, und während der Vulkanisation oder Vernetzung das Elastomer (4) sich um den in das Elastomer (4) eingeführten Abschnitt (8) des Einsatzes verfestigt und dabei das Messsystem (6) einbettet, und dann die Vorrichtung (1), die den Einsatz (7), das um den Abschnitt (8) des Einsatzes verfestigte Elastomer (4) und das in dem Elastomer (4) eingebettete Messsystem (6) umfasst, entformt wird.

9. Verfahren nach Anspruch 8 in Abhängigkeit von einem der Ansprüche 5 bis 6, **dadurch gekennzeichnet, dass** bei Ausübung von Druck der Einsatz (7) einen Abschnitt (10) umfasst, der in die Abdeckung (9) eingeführt wird, um eine Stellung des Einsatzes (7) zu halten.

10. Verfahren nach Anspruch 8 oder 9, **dadurch gekennzeichnet, dass** der Einsatz eine Schaftform hat, die sich entlang einer Ausdehnungsrichtung (11) erstreckt und ein erstes Ende (80), das in das Elastomer (4) eingeführt werden soll, und ein zweites Ende (100), das nicht in das Elastomer (4) eingeführt werden soll, umfasst.

11. Verfahren nach Anspruch 10, **dadurch gekennzeichnet, dass** der Druck entlang der Ausdehnungsrichtung (11) des Schafts ausgeübt wird.

12. Verfahren nach Anspruch 10 oder 11, **dadurch gekennzeichnet, dass** sich das Messsystem (6) nach der Verfestigung in dem Elastomer (4) in der Verlängerung des Schafts entlang der Ausdehnungsrichtung (11) auf der Seite des ersten Endes (80) befindet.

13. Verfahren nach Anspruch 1, **dadurch gekennzeichnet, dass** das Elastomerteil durch Einspritzen oder Überführen von Material in das Innere der Form geformt wird.

14. Verfahren nach einem der vorhergehenden Ansprüche, **dadurch gekennzeichnet, dass** die Vorrichtung (1) ein Kolben (101) oder eine Dichtung (102) ist.

15. Verfahren nach einem der vorhergehenden Ansprüche, **dadurch gekennzeichnet, dass** die Übertragungsmittel einen RFID-Marker umfassen.

16. Verfahren nach einem der vorhergehenden Ansprüche, **dadurch gekennzeichnet, dass** der zumindest eine physikalische Parameter eine Temperatur des Elastomerteils umfasst.

17. Verfahren nach einem der vorhergehenden Ansprüche, **dadurch gekennzeichnet, dass** der zumindest eine physikalische Parameter eine Kraft oder einen Druck umfasst, die bzw. der auf das Elastomerteil ausgeübt wird.

18. Verfahren nach einem der vorhergehenden Ansprüche, **dadurch gekennzeichnet, dass** der zumindest eine physikalische Parameter eine elektrische Impedanz des Elastomerteils umfasst.

19. Verfahren nach einem der vorhergehenden Ansprüche, **dadurch gekennzeichnet, dass** es vor und/oder während der Verfestigung des Elastomers ein Erhitzen des Elastomers umfasst.

20. Vorrichtung, umfassend:
- ein Teil (12) aus verfestigtem Elastomer (4),
- ein Messsystem (6), das mit einem Verfahren nach einem der vorhergehenden Ansprüche in das Innere des Elastomerteils eingebettet wird, wobei das Messsystem einen Sensor zum Messen von zumindest einem physikalischen Parameter, dem das Elastomerteil ausgesetzt ist, einen Speicher zum Abspeichern von Daten des zumindest einen vom Sensor gemessenen physikalischen Parameters, Mittel zur Übertragung dieser Daten nach außerhalb des Elastomerteils und eine Stromversorgungsquelle umfasst.

21. Vorrichtung nach Anspruch 20, **dadurch gekennzeichnet, dass** die Vorrichtung ein Kolben (1) ist, und dass
- das Teil (12) aus verfestigtem Elastomer (4) ein Kolbenkopf (12) aus verfestigtem Elastomer (4) ist,
- das Messsystem (6) in das Innere des Elastomerkopfes eingebettet ist,
wobei die Vorrichtung ferner umfasst:
- eine Kolbenachse mit einem Einsatz (7), von dem zumindest ein Abschnitt (8) in das Elastomer (4) eingeführt ist.

## Claims

1. A method of manufacturing a device (1) comprising a part (12) made from elastomer (4), wherein the elastomer part is molded in a mold (3) by compression and/or injection and/or material transfer inside the mold (3), and solidifies by vulcanization or cross-linking inside the mold, **characterized in that,** during the solidification by vulcanization or cross-linking of the elastomer part, a measuring system (6) is located in the elastomer part, so that after the solidification by vulcanization or cross-linking, the measuring system (6) is embedded inside the elastomer part (12), said measuring system comprising a sensor arranged to measure at least one physical parameter to which the elastomer part is subjected, a memory arranged to store data of the at least one physical parameter measured by the sensor, means for transmitting these data outside the elastomer part, and a power source.

2. The method according to claim 1, **characterized in that** the elastomer part is compression-molded.

3. The manufacturing method according to claim 2, **characterized in that** the elastomer part is compression-molded according to the following steps:
- the elastomer (4) with a cavity (5) is introduced into a recess (2) in the mold (3),
- the measuring system (6) is introduced into the cavity (5) of the elastomer (4),
- while the elastomer (4) and the measuring system (6) are contained in the recess (2) of the mold (3), pressure is exerted on the elastomer (4) with a pressure element.

4. The method according to claim 3, **characterized in that** the pressure exerted by the pressure element on the elastomer (4) is exerted so that a portion (8) of the pressure element initially closes the cavity (5) with the measuring system (6) enclosed within the cavity (5).

5. The method according to claim 3 or 4, **characterized in that** the mold (3) further comprises a cover (9) which closes the recess (2) of the mold (3) during solidification of the elastomer (4).

6. The method according to claim 5, **characterized in that** when the elastomer (4) is introduced into the recess (2) of the mold (3), the recess (2) of the mold (3) is not yet closed by its cover (9).

7. The method according to claim 5 or 6, **characterized in that** the pressure element comprises the cover (9) exerting pressure directly on the elastomer part.

8. The method according to any one of claims 3 to 6, **characterized in that** the pressure element comprises an insert (7), pressure being exerted on the elastomer by the insert (7) so that at least a portion (8) of the insert (7) is inserted into the elastomer (4), and during vulcanization or cross-linking the elastomer (4) solidifies around the portion (8) of the insert inserted into the elastomer (4) while embedding the measuring system (6), then the device (1) comprising the insert (7), the elastomer (4) solidified around the portion (8) of the insert and the measuring system (6) embedded in the elastomer (4) is demolded.

9. The method according to claim 8 considered as dependent on any one of claims 5 to 6, **characterized in that** upon exertion of pressure, the insert (7) comprises a portion (10) which is inserted into the cover (9) so as to maintain a position of the insert (7).

10. The method according to claim 8 or 9, **characterized in that** the insert has the shape of a rod extending along a direction of elongation (11) and comprising a first end (80) intended to be inserted into the elastomer (4) and a second end (100) intended not to be inserted into the elastomer (4).

11. The method according to claim 10, **characterized in that** the pressure is exerted along the direction of elongation (11) of the rod.

12. The method according to claim 10 or 11, **characterized in that** after solidification, the measuring system (6) is located in the elastomer (4) in the extension of the rod along the direction of elongation (11), and on the side of the first end (80).

13. The method according to claim 1, **characterized in that** the elastomer part is molded by injection or transfer of material inside the mold.

14. The method according to any one of the preceding claims,
**characterized in that** the device (1) is a piston (101) or a seal (102).

15. The method according to any one of the preceding claims,
**characterized in that** the transmission means comprise an RFID marker.

16. The method according to any one of the preceding claims,
**characterized in that** the at least one physical parameter comprises a temperature of the elastomer part.

17. The method according to any one of the preceding claims,
**characterized in that** the at least one physical parameter comprises a force or pressure exerted on the elastomer part.

18. The method according to any one of the preceding claims,
**characterized in that** the at least one physical parameter comprises an electrical impedance of the elastomer part.

19. The method according to any one of the preceding claims,
**characterized in that** it comprises, before and/or during solidification of the elastomer, heating of the elastomer.

20. A device comprising:
- a part (12) made from solidified elastomer (4),
- a measuring system (6) embedded, according to a method according to any one of the preceding claims, inside the elastomer part, said measuring system comprising a sensor arranged to measure at least one physical parameter to which the elastomer part is subjected, a memory arranged to store data of the at least one physical parameter measured by the sensor, means for transmitting these data outside the elastomer part, and a power source.

21. The device according to claim 20, **characterized in that** the device is a piston (1), and **in that**:
- the part (12) made from solidified elastomer (4) is a piston head (12) made from solidified elastomer (4),
- the measuring system (6) is embedded inside the elastomer head,
the device further comprising:
- a piston pin comprising an insert (7), at least a portion (8) of which is inserted into the elastomer (4).
